(19) Europäisches Patentamt
European Patent Office
Office européen des brevets

(11) Publication number: **0 426 142 B1**

# (12) EUROPEAN PATENT SPECIFICATION

(45) Date of publication of patent specification: **20.09.95** (51) Int. Cl.[6]: **C08G 61/08**

(21) Application number: **90120871.0**

(22) Date of filing: **31.10.90**

## (54) Method of making ring-opened polynorbornene polymers using pot life extending agents.

(30) Priority: **01.11.89 JP 285555/89**
**01.11.89 JP 285556/89**

(43) Date of publication of application:
**08.05.91 Bulletin 91/19**

(45) Publication of the grant of the patent:
**20.09.95 Bulletin 95/38**

(84) Designated Contracting States:
**BE DE FR GB IT NL SE**

(56) References cited:
**EP-A- 0 324 979**
**EP-A- 0 324 980**
**US-A- 4 727 125**

**PATENT ABSTRACTS OF JAPAN, vol. 13, no. 179 (C-590)[3527], 26th April 1989; & JP-A-1 9218**

(73) Proprietor: **NIPPON ZEON CO., LTD.**
**6-1, Marunouchi 2-chome**
**Chiyoda-ku**
**Tokyo 100 (JP)**

(72) Inventor: **Torii, Masao, c/o Nippon Zeon Co. Ltd.**
**Res. & Dev. Center,**
**1-2-1, Yako, Kawasaki-ku**
**Kawasaki City,**
**Kanagawa (JP)**
Inventor: **Sugahara, Motoo, c/o Nippon Zeon Co. Ltd.**
**Res. & Dev. Center,**
**1-2-1, Yako, Kawasaki-ku**
**Kawasaki City,**
**Kanagawa (JP)**
Inventor: **Okumura, Kin-ichi, c/o Nippon Zeon Co. Ltd.**
**Res. & Dev. Center,**
**1-2-1, Yako, Kawasaki-ku**
**Kawasaki City,**
**Kanagawa (JP)**
Inventor: **Yamato, Motoyuki, c/o Nippon Zeon Co. Ltd.**
**Res. & Dev. Center,**
**1-2-1, Yako, Kawasaki-ku**
**Kawasaki City,**
**Kanagawa (JP)**

(74) Representative: **von Kreisler, Alek, Dipl.-Chem. et al**
**Patentanwälte**
**von Kreisler-Selting-Werner**
**Postfach 10 22 41**
**D-50462 Köln (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

## BACKGROUND OF THE INVENTION

1. Technical Field

This invention relates to a method for making norbornene polymers. Particularly, this invention relates to the ring-opening polymerization of norbornene monomers in the presence of a metathesis catalyst system. More particularly, the present invention pertains to the bulk ring-opening polymerization of a solution of norbornene monomers containing a pot life adjusting agent.

2. State of the Art

The technique of bulk ring-opening polymerization of norbornene type monomers such as alkyl substituted norbornene, dicyclopentadiene and tricyclopentadiene by means of a molybdenum and/or tungsten compound metathesis catalyst within a mold is well known as disclosed in U.S. Patent No. 4,380,617.

Generally, bulk ring-opening polymerization in a mold, e.g., reaction injection molding (RIM), is conducted by mixing a norbornene type monomer with a metathesis catalyst and cocatalyst (activating agent) in the absesnce of a solvent, conveying the reactive mixture to a mold, then letting the polymerization reaction take place to form a solid article. After mixing, polymerization commences and the viscosity of the reaction solution increases until passing the point where fluidity is almost lost. The time it takes the system to reach this point after mixing is called pot life. Stated differently, pot life is the time interval between the mixing of the reactive ingredients to form the reactive solution and the point where the solution becomes too viscous (e.g. gels) to adequately fill a mold. After this point the polymerization reaction progresses rapidly and the gel converts to a glassy solid (e.g., a high conversion of monomer to polymer is achieved). An exotherm is associated with the rapid polymerization rate causing the unconverted monomer to vaporize when their boiling points are reached. The vaporization of unconverted monomer gives the system the appearance of smoking. Accordingly, the time interval it takes from mixing the reactants to the point at which the exotherm (e.g. smoke is produced) is attained is defined as the smoking time.

Early attempts at bulk polymerization produced reactions that were too rapid and, therefore, uncontrollable. The combination of molybdenum or tungsten catalyst and a cocatalyst such as alkylaluminum halide proved to be too active; progressing rapidly even at the room temperature. For this reason, methods have been proposed to prolong the pot life of bulk polymerizable reactive monomer formulations and to prevent premature polymerization. Approaches to improve catalyst systems by utilizing ether, ester, ketone, or nitrile activity adjusting agents have been proposed as disclosed in Japanese Patent Application Nos. 58-129013, 61-120814, and 61-179214.

However, in conventional techniques pot life is still inadequate leading to operational difficulties in molding. The premature increase in viscosity of the reaction solution makes it difficult to uniformly convey the reaction solution throughout the mold, resulting in molded products with flow marks or weld lines that are generated by non-uniform hardening. This leads to products of poor surface quality and reduced physical properties.

Moreover, in cases where a reinforcing material such as glass fiber is placed within the mold prior to the introduction of the reaction solution (to make fiber-reinforced products), viscous reaction solutions may cause the shifting of the reinforcing fiber within the mold or insufficient permeation of the reaction solution into the reinforcing fiber matrix.

In a further development, a method to improve pot life by using a tertiary alcohol in conjunction with an alkylaluminum or alkylaluminum halide cocatalyst has been proposed as disclosed in Japanese Patent Application No. 63-332776. Although pot life is prolonged by this method, smoking time is also prolonged along with it. In some cases, the activity is reduced, and a high conversion ratio can not be attained.

Norbornene type monomers with three rings such as dicyclopentadiene (DCP) are used widely since they are industrially easy to obtain. However, when tricyclopentadiene (TCP) is used as a monomer to raise the heat resistance of poly DCP resin, the pot life of the reaction solution is shortened.

In the bulk ring-opening polymerization of norbornene type monomers, the objective is to balance ease of operation, moldability, and productivity. In other words, premature polymerization of the reaction solution at the initial stages of the molding operation must be prevented. The reaction components and additives must be mixed completely, change of viscosity during the feeding of the solution into the mold must be curbed, and the solution must be polymerized immediately after feeding it into the mold.

Therefore, it is important to control the reaction solution so that the pot life can be prolonged without overly prolonging the smoking time.

## SUMMARY OF THE INVENTION

It is a primary object of the present invention to shorten the molding cycle time of a bulk polymerizable solution of a norbornene type monomer by prolonging its pot life while not prolonging its smoking time.

It is another object of the present invention to improve the ease of operation in the bulk ring-opening polymerization of a norbornene type monomer.

It is a further object of this invention to obtain molded reinforced or non-reinforced products with good outward appearance and physical properties, by curbing viscosity changes of the reaction solution during the feeding of the solution into a mold.

It is a still further object of this invention to provide a method for the production of molded reinforced articles without the shifting of the reinforcing material in the mold during the mold fill step.

A still further object of this invention is to prevent the insufficient permeation of the reaction solution into the reinforcing materials during the mold fill step.

Broadly stated, the foregoing objects are achieved by using a metathesis catalyst system comprising a molybdenum type metathesis catalyst, a cocatalyst, and a pot life adjusting agent selected from 5-alkenyl-2-norbornenes (VNB's) in conjunction with tricyclopentadiene and a norbornene monomer(s) having at least 3 rings in its backbone.

VNB's contain alpha-olefin unsaturation. Without being bound by a specific theory of invention, it is believed that the carbon-carbon double bond of the alpha-olefin moiety inhibits chain growth during the initial stage of the metathesis reaction.

In the past, it has been proposed to add various acyclic olefins to the reaction solution as molecular weight adjusting agents during the ring-opening polymerization of norbornene type monomers. However, when olefins such as 1-dodecene or 1,6-heptadiene, styrene, divinylbenzene, are added to a bulk polymerizable norbornene monomer solution, there is hardly any effect of prolonging pot life. Although some prolonging of pot life can be observed when a large amount of the foregoing olefins are added, the physical properties of the obtained polymer, such as the glass transition temperature (Tg), deteriorate.

Other proposals have included cross-linked polymerization products between VNB's and dicyclopentadiene as disclosed in Japanese Patent Application No. 63-12612. Methods of making copolymers and homopolymers of VNB's and 5-ethylidene-2-norbornene are disclosed in Japanese Patent Application No. 63-7610. However, in these disclosures, tungsten halides and oxyhalides are used as the metathesis catalyst. Although tungsten compounds are high activity metathesis catalysts, they have little affect, if any, in prolonging pot life.

Therefore, it was an unexpected discovery that the aforementioned combination can prolong the pot life without substantially delaying the smoking time.

In order to obtain polymers with high heat deformation temperature, a norbornene type monomer mixture containing monomers having at least three or more rings in its backbone are utilized. At least one of the monomers must be tricyclopentadiene (symmetrical and unsymmetrical trimers of cyclopentadiene) depicted by the following structures:

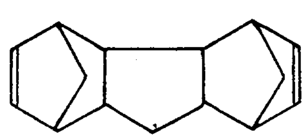

Symmetrical Trimer

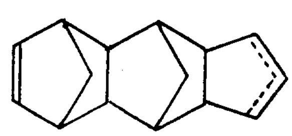

Unsymmetrical Trimer

Those skilled in the art will recognize that the double bond in the 5-membered monocyclic ring of the unsymmetrical trimer can be located in either of the two positions indicated by the dashed bond representation.

Examples of the norbornene type monomers with three or more rings are: three-ring monomers such as dicyclopentadiene and dihydrodicyclopentadiene; four-ring monomers such as tetracyclododecene, methyltetracyclododecene, ethyltetracyclododecene, dimethyltetracyclododecene, ethylidenetetracyclododecene, phenyltetracyclododecene. Especially, dicyclopentadiene (DCP) is most desirable, in terms of obtainability.

These norbornene type monomers can be used alone with tricyclopentadiene, or more than two kinds can be used together with tricyclopentadiene.

The amount of tricyclopentadiene (TCP) in the norbornene monomer mixture can range between 5 to 60 weight percent and preferably between 10 to 50 weight percent of the total monomer mixture. The amount of other norbornene monomer(s) copolymerizable therewith can range between 95 to 40 weight percent and preferably between 90 to 50 weight percent of the total monomer mixture.

Such a monomer mixture can also be obtained by heat-processing dicyclopentadiene in an inert gas atmosphere at 120 to 250 °C for 0.5 to 20 hours. For example, by heat processing DCP a monomer mixture containing TCP and unreacted DCP can be obtained. In this case, a monomer mixture containing 40 to 95 weight percent, and more preferably 60 to 95 weight percent (based on the monomer mixture) of DCP is desirable. Accordingly, TCP and higher homologs thereof will be present in the amount of 60 to 5 weight percent, and more preferably 40 to 5 weight percent (of the total monomer mixture).

In addition, it is possible to use the following monomers as copolymerizable monomers with TCP so long as their use does not defeat the objective of this invention: two-ring norbornene type monomers that can be polymerized along with the above disclosed other tricyclic or higher cyclic norbornene type monomers, such as 2-norbornene, 5-methyl-2-norbornene, 5-ethyl-2-norbornene, 5-butyl-2-norbornene, 5-hexyl-2-norbornene, 5-ethylidene-2-norbornene, 5-ethylidene-2-norbornene, 5-phenylnorbornene; or monocyclic olefins such as cyclobutene, cyclopentene, cyclopentadiene, cyclooctane, and cyclododecene.

The pot life adjusting agents of the present invention are selected from 5-alkenyl-2-norbornene(s) (and 2,5-norbornadienes) represented by the following formula:

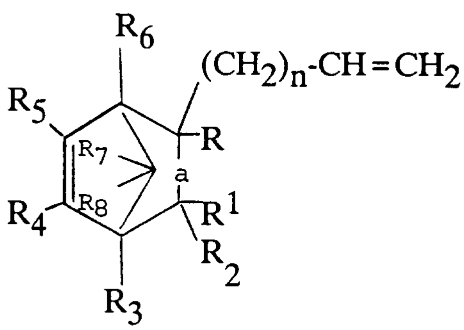

wherein R, $R_1$, and $R_2$ independently represent hydrogen, $C_1$ to $C_6$ alkyl and monomethyl, monochloro and dichloro substituents thereof, $C_2$ to $C_6$ alkenyl and monomethyl, monochloro and dichloro substituents thereof; $R_3$, $R_4$, $R_5$, $R_6$, $R_7$ and $R_8$ independently represent hydrogen, a methyl group or a halogen atom; n is 0 to 4 (preferably 0 or 1) and "a" represents a single or double bond with the proviso that when "a" is a double bond, R and $R_1$ are not present.

Specific examples of foregoing pot life adjusting agents are: 5-vinylbicyclo [2,2,1] hepto-2-ene (VNB), 5-isopropenylbicyclo [2,2,1] hepto-2-ene (IPN), 5-vinyl-4-vinylbicyclo [2,2,1] hepto-2-ene, 5-propenyl-bicyclo [2,2,1] hepto-2-ene, 5-butenyl-bicyclo [2,2,1] hepto-2-ene, 5-pentenyl-bicyclo [2,2,1] hepto-2-ene; monomethyl substitutes of the above; monochloro substitutes of the above; dichloro substitutes of the above; 5-alpha-chlorovinylbicyclo [2,2,1] hepto-2-ene, 5-vinylbicyclo [2,2,1] hepto-1,4-diene, which is a Diels-Alder reaction product of cyclopentadiene and vinylacetylene, is another example of a pot life adjusting agent useful herein.

Among the above, VNB and IPN are most desirable, since they are easiest to obtain. They can be made by the Diels-Alder reaction products of butadiene or isoprene and cyclopentadiene. DCP can be obtained inexpensively from the $C_5$ fraction of naphtha cracking followed by purification.

The amount of VNB to be added as the pot life adjusting agent should be at least 0.5 weight parts per 100 weight parts of norbornene monomer with three or more rings, preferably 1 to 60 weight parts, and more preferably 5 to 45 weight parts. When the amount of VNB utilized is small, the effect of prolonging the pot life is reduced. On the other hand, if too much VNB is utilized, the glass transition temperature (Tg) of the resin (e.g., norbornene type polymer) is lowered.

The catalyst to be used in this invention can be any molybdenum compound metathesis catalyst system that is known for the ring-opening polymerization of the norbornene type monomer(s). Examples are the halides, oxyhalides, oxides, and organic ammonium salts of molybdenum; the most desirable are the organic ammonium salts that are described in Japanese Patent Application Nos. 58-127728 and 59-51911.

Specific examples of the molybdenum type metathesis catalyst are: tridodecyl ammonium molybdate, methyltricapryl ammonium molybdate, tri(tridecyl)ammonium molybdate, trioctyl ammonium molybdate, molybdenum pentachloride, and molybdenum oxytrichloride.

Specific examples of useful cocatalysts (activating agent) are: alkylaluminum halides, alkoxyalkylaluminum halides, aryloxyalkylaluminum halides, and organic tin compounds.

In the case of alkylaluminum halides, it should be noted that these cocatalysts tend to be very active. Accordingly, polymerization begins immediately upon mixing with a catalyst. Therefore, a moderating agent such as an ether, ester, ketone, nitrile, or alcohol may be utilized to moderate the action of the cocatalyst as disclosed in Japanese Patent Application Nos. 58-129013 and 61-120814.

In addition to the catalyst and the cocatalyst, it is also possible to use a hydrocarbon halide as a polymerization enhancing agent such as hexachlorocyclopentadiene as disclosed in Japanese Patent Application No. 60-79035, and halide metals such as silicon tetrachloride, germanium tetrachloride, and lead tetrachloride as disclosed in Japanese Patent Application No. 63-186730.

As for the amounts of the metathesis catalyst to employ, approximately 0.01-50 millimoles, or preferably 0.1-20 millimoles, is used per 1 mole of the monomer. As for the cocatalyst (the activating agent), 0.1-20 (molar ratio) per catalyst component, or preferably 1-10 (molar ratio), is used.

It is preferred that the metathesis catalyst and the activator be dissolved in the monomer. However, as long as it is within a range where there is essentially no loss of properties in the product, the catalyst and cocatalyst can also be suspended or dissolved in a small amount of solvent.

In this invention, the norbornene type monomer is polymerized by bulk ring-opening polymerization within a mold by the use of metathesis catalyst. As long as it is essentially bulk type polymerization, it is all right for a small amount of inactive solvent to be present in the system.

In a preferable polymerization method, the norbornene type monomer is divided into two portions and put into two different containers; to one container, the metathesis catalyst is added, and to the other container, an activating agent is added. After mixing the two reaction solutions and feeding the mixture into a mold, the ring-opening polymerization is conducted.

In this invention, an impingement mixing device, which is a well-known reaction injection molding (RIM) device, can be used to mix the two reaction solutions. In this case, the containers containing each of the reaction solutions become the sources for supplying two different feed streams. Mixing the two feed streams in the mixing head of the RIM machine, and then injecting the mixture into a high-temperature mold, products can be instantaneously molded by bulk ring-opening polymerization.

It is also possible to inject or pour the reaction solution into a preheated mold, after completing the mixing of the two reaction solutions as disclosed in Japanese Patent Application No. 59-51911 (U.S. Patent No. 4,426,502).

This invention is not limited to the method in which two types of reaction solutions are used. As it can be easily understood by experts in the field, various variations of the method are possible, such as putting the monomer and a desired additive in a third container and using it as the source of a third feed stream.

The mold material can be metals, resin, wood, cement, plastic, etc. However, from the economical standpoint, it is desirable to use molds constructed from resin.

The mold temperature should be more than ambient room temperature, or preferably, from 40 to 200 °C, or more preferably, from 50 to 120 °C. The mold clamping pressure should be within the range of from 0.1 to 100 $kg/cm^2$.

The polymerization time can be determined as needed. The time from the pot life to the smoking time should be within five minutes, or preferably within two minutes.

In addition, the reaction solution is stored and handled in an inert gas atmosphere such as nitrogen gas. However, the mold does not necessarily have to be sealed by inert gas.

In this invention, the reinforcing material (if utilized) is installed within the mold in advance, and the reaction solution is fed into the mold and polymerized in the presence of the reinforcing material.

Examples of the reinforcing material are: glass fiber, aramide fiber, carbon fiber, super-high molecular weight polyethylene fiber, metal fiber, polypropylene fiber, aluminum coated glass fiber, cotton, acrylic fiber, boron fiber, silicon carbide fiber, and alumina fiber. Other examples are whiskers of potassium titanate or calcium sulfate.

Furthermore, these reinforcing materials can be used in various shapes, such as long fibers, chopped strands, mats, cloth, etc.

The reinforcing materials can be treated with a coupling agent for the purpose of improving the adhesiveness with the resin. Silane coupling agents are the most desirable.

There is no restriction to the amount of reinforcing material utilized. Generally, 20 weight percent, or preferably from 30 to 70 weight percent (based on the total weight of the molded article), is used.

By adding various additives, such as oxidation inhibitors, filling agents, dyes, coloring agents, foaming agents, flame retarding agents, elastomers, dicyclopentadiene type thermal polymerization products and hydrates thereof,it is possible to improve the properties of the polymer obtained by the method of the present invention.

For the oxidation inhibitors, there are various types for plastics and rubbers, such as the phenols, phosphorus compounds and amines.

For the filling agent, there are inorganic filling agents, such as milled glass, carbon black, talc, calcium carbonate, mica.

For elastomer, natural rubber, polybutadiene, polyisoprene, styrene-butadiene copolymer (SBR), styrene-butadiene-styrene block copolymer (SBS), styrene-isoprene-styrene block copolymer (SIS), ethylene-propylene-diene terpolymer )EPDM), ethylene vinyl acetate copolymer (EVA) and hydrides of the above.

The additives are to be mixed in one or both of the reaction solutions in advance.

The following examples will show one skilled in the art how to operate within the scope of the present invention and are not intended to serve as a limitation on the scope thereof. In these examples, all parts are parts by weight and all percentages are percentages by weight unless otherwise indicated.

EXAMPLES 1-10

This example demonstrates the pot life adjusting properties of the VNB additives of the present invention.

A mixed monomer solution was made by mixing dicylopentadiene (DCP) (purity of 99.3 percent), tricyclopentadiene (TCP) (a mixture of non-symmetrical type 80 percent and symmetrical type 20 percent) (purity 96.1 percent), and 5-vinylbicyclo [2,2,1] hepto-2-ene (VNB) (purity 99.8%) in the proportions shown in Table 1; 20 ml of the mixed monomer solution was placed in a glass reaction vessel which was kept at 35 °C.

To the above vessel, diethylaluminum chloride (DEAC) 20 millimole/liter, n-propyl alcohol 20 millimole/liter, silicon tetrachloride 10 millimole/liter, and tri(dodecyl)ammonium molybdate 5 millimole/liter were added, and mixed.

The time it took from the beginning of mixing until the reaction solution gelled was measured as the pot life (PL). The time from the beginning of the mixing until the generation of slight smoke was measured as the smoking time (SMT).

These operations were conducted in the nitrogen gas atmosphere. The glass transition temperature (Tg) and the invert ratio of the obtained resin were measured. The results are shown in Table 1.

It is clear from Table 1 that with the three component system containing TCP, the glass transition temperature (Tg) of the obtained polymers increased. From comparative Examples 7 to 9, it can be seen that the pot life is relatively short with respect to the DCP or DCP/TCP system (without VNB). Pot life can be prolonged and the SMT/PL ratio reduced by adding even small amounts of VNB as shown in comparative Example 10.

TABLE 1

| | | Examples | | | | | | | | | |
|---|---|---|---|---|---|---|---|---|---|---|---|
| | | 1 | 2 | 3 | 4 | 5 | 6 | 7*) | 8*) | 9*) | 10*) |
| Monomer Mixture | DCP (%) | 87 | 62 | 85 | 60 | 75 | 50 | 90 | 65 | 100 | 95 |
| | TCP (%) | 10 | 35 | 10 | 35 | 10 | 35 | 10 | 35 | 0 | 0 |
| | VNB (%) | 3 | 3 | 5 | 5 | 15 | 15 | 0 | 0 | 0 | 5 |
| Polymerization Activity | PL (sec.) | 18 | 25 | 24 | 39 | 40 | 81 | 5 | 11 | 18 | 48 |
| | SMT (sec.) | 38 | 48 | 42 | 65 | 47 | 90 | 31 | 51 | 55 | 64 |
| | SMT/PL | 2.1 | 1.9 | 1.8 | 1.7 | 1.2 | 1.1 | 6.2 | 4.6 | 3.1 | 1.3 |
| Polymer Properties | Tg (°C) | 155 | 182 | 152 | 179 | 136 | 162 | 152 | 181 | 148 | 139 |
| | Invert Conversion (%) | 98.9 | 98.9 | 98.9 | 98.8 | 98.7 | 99.0 | 98.5 | 98.4 | 98.7 | 98.9 |

*) comparative example

EXAMPLES 11-12

These comparative examples illustrate the use of a tungsten catalyst system which is not an embodiment of the present invention.

20 ml of the norbornene monomer mixtures shown in Table 2 were placed in a glass reaction vessel. To the vessel were added 19 millimole/liter of DEAC and 65 millimole/liter of di-n-butylether along with 1.9 millimole/liter of tungsten hexachloride. The rest of the experiment was conducted in the same manner as set forth in Examples 1 to 10.

The data on PL and SMT are shown in Table 2. From the results it can be seen that when a tungsten type metathesis catalyst is used, regardless of the presence of VNB, the SMT/PL ratio is relatively large and the interval between PL and SMT is long.

TABLE 2

| | | Example | |
|---|---|---|---|
| | | **11*)** | **12*)** |
| Monomer mixture | DCP (%) | 90 | 81 |
| | TCP (%) | 10 | 9 |
| | VNB (%) | 0 | 10 |
| Polymerization Activity | PL | 35 | 58 |
| | SMT | 107 | 149 |
| | SMT/PL | 3.1 | 2.6 |

*) comparative example

EXAMPLES 13-17

Examples 13 to 17 were conducted in the same manner as Examples 1 to 10 except that VNB was replaced with 5-isopropenylbicyclo [2,2,1] hepto-2-ene (IPN) in the composition ratios shown in Table 3. The results are shown in Table 3.

From the results set forth in Table 3, it can be seen that IPN has the same effect as VNB. IPN has a higher boiling point than VNB, making molding operations easier, and giving polymers with high Tg.

TABLE 3

| | | Examples | | | | |
|---|---|---|---|---|---|---|
| | | 13 | 14 | 15 | 16 | 17*) |
| Monomer Mixture | DCP (%) | 80 | 60 | 55 | 35 | 0 |
| | TCP (%) | 10 | 10 | 35 | 35 | 0 |
| | IPN (%) | 10 | 30 | 19 | 30 | 100 |
| Polymerization Activity | PL (sec.) | 53 | 65 | 61 | 83 | 172 |
| | SMT (sec.) | 73 | 78 | 85 | 94 | 174 |
| | SMT/PL | 1.4 | 1.2 | 1.4 | 1.1 | 1.0 |
| Polymer Properties | Tg (°C) | 157 | 136 | 183 | 164 | - |
| | Invert Ratio (%) | 98.8 | 97.8 | 98.7 | 98.2 | - |

*) comparative example

EXAMPLE 18

This example was conducted in the same manner as Examples 1 to 10 except that the monomer mixture comprised DCP, TCP, and methyltetracyclododecene (MTD) in the amounts of 60, 10 and 25 percent, respectively. VNB in the amount of 5 percent was utilized as the pot life adjusting agent.

The polymerization activity of the system was as follows: PL was 33 seconds; SMT was 54 seconds; and the SMT/PL ratio was 1.6. The Tg of the polymer was 165 °C, and the invert ratio was 98.8 percent.

EXAMPLE 19

Into a vessel was placed 90 parts of DCP, 10 parts of TCP and 1000 ppm of 2,6-di-t-butyl-4-hydroxytoluene (BHT), 3.5 parts of styrene-isoprene-styrene block elastomer (SIS, made by Nippon Zeon K.K. Quicktack 3421) was added to the mixture and dissolved. To the monomer mixture 41 millimole/liter of DEA and 50 millimole/liter of n-propyl alcohol were added and mixed (Solution A).

Into a separate vessel, 6 parts of BHT and 3.5 parts of SIS were dissolved into a monomer mixture of 80 parts of DCP, 9 parts of TCP, and 11 parts of VNB. To the monomer mixture tri(dodecyl)ammonium molybdate was added in an amount so that its concentration in the mixture was 12 millimole/liter (Solution

B).

From each of Solutions A and B, 100 ml was removed and mixed in a separate vessel.

The polymerization activity was measured as set forth in the previous examples. At 30°C, PL was 9 minutes 15 seconds and SMT was 14 minutes 28 seconds.

Separate aliquots of reaction Solutions A and B were mixed in a ratio of 1:1 using a gear pump and a power mixer. The mixed solution was fed into a mold having dimensions of 500 mm x 500 mm x 3 mm which was preheated to 60°C under atmospheric pressure. The feeding time took approximately 30 seconds. After feeding, the polymerization reaction proceeded for 90 seconds. A molded plaque was removed from the mold. The plaque had a good appearance without flow marks or weld lines. The Tg of the plaque was 143°C, the bending strength was 6.3 kg/mm$^2$, the bending elasticity was 195 kg/mm$^2$, and the notched Izod impact strength was an excellent value of more than 40 kg/cm$^2$.

Comparative EXAMPLE 20

This example was conducted in the same manner as Example 19, except that the monomer mixture of Solution B used 90 parts of DCP and 10 parts of TCP. No VNB was utilized.

The polymerization activity was as follows: PL was 2 minutes 50 seconds and SMT was 13 minutes 38 seconds at 30°C.

Flow marks and weld lines were observed on the surface of the molded plaque.

Comparative EXAMPLES 21-23

These examples were conducted in the same manner as Examples 1-3, except that the compounds shown in Table 4 were substituted for the VNB pot life adjusting agent. Results are shown in Table 4.

From Table 4, it can be seen that the norbornene compositions which are not substituted at the 5-position with an alkenyl group (e.g., terminal vinyl group) or a non-norbornene compound do not have the effect of reducing the interval between PL and SMT.

TABLE 4

| | | **Comparative Examples** | | |
|---|---|---|---|---|
| | | **21** | **22** | **23** |
| Additive | | bicyclo [2,2,1] hepto-2-ene | 1,6-heptadiene | 6-vinyl-1,4,5,8-dimethano-1,4,4a,5,7,8,8a--heptahydronaphthalene |
| Polymerization Activity | PL (sec.) | 10 | 32 | 12 |
| | SMT (sec.) | 38 | 63 | 41 |
| | SMT/PL | 3.8 | 2.0 | 3.4 |
| Physical Properties of the Polymer | Tg(°C) | 129 | 85 | 159 |
| | Invert Ratio (%) | 97.8 | - | 96.5 |

EXAMPLES 24-27

In a flat mold (dimensions: 3 mm x 200 mm x 200 mm) was placed a fiber mat consisting of three piles of chopped strand mats (450 g/m$^2$) bound together with a polystyrene binding agent. The glass fiber mat was treated with a styryl silane coupling agent.

Separately, a mixed norbornene type monomer solution was prepared utilizing DCP (99.3 percent purity), TCP (a mixture of 80 percent non-symmetrical trimer and 20 percent symmetrical trimer) (96.1 percent purity) and VNB (99.8 percent purity). These ingredients were mixed in the amounts shown in Table 5. Equal amounts of the mixed norbornene type monomer solution was placed into two reaction vessels. In

one of the vessels, DEAC, n-propyl alcohol, and silicon tetrachloride were added so that their concentrations were 41 millimole/liter of monomer, 41 millimole/liter, and 20 millimole/liter, respectively (Solution A). The viscosity of Solution A was approximately 30 centipoise at 25 ° C.

In the other vessel, tri(tridecyl)ammonium molybdate was added in the amount of 10 millimole/liter of monomer (Solution B). The viscosity of Solution B was approximately the same as that of Solution A.

Both reaction solutions were mixed at a 1:1 ratio using a gear pump and power mixer. The mixture was then fed into the mold containing the fiber mat. Before the addition of the reaction solution the mold was heated to 40 ° C.

After feeding the reactive monomer solution into the mold, the reaction proceeded for 90 seconds. The molded product was removed from the mold to observe the outward appearance and the filling condition of the resin. The results are shown in Table 5.

**TABLE 5**

| | | Examples | | | |
|---|---|---|---|---|---|
| | | 24 | 25 | 26 | 27 |
| Monomer Composition | DCP (%) | 87 | 85 | 75 | 95 |
| | TCP (%) | 10 | 10 | 10 | 0 |
| | VNB (%) | 3 | 5 | -15- | 5 |
| Molding Operation | | Easy | Easy | Easy | Easy |
| Properties of Reinforced Polymer | Filling Condition | Complete | Complete | Complete | Complete |
| | Flow Marks | Some | None | None | None |
| | Weld Lines | None | None | None | None |

EXAMPLES 28-29

These examples were conducted in the same manner as set forth in Examples 24-27, except that VNB was replaced with IPN, in the composition ratios shown in Table 6. The results are shown in Table 6.

TABLE 6

| | | Examples | |
|---|---|---|---|
| | | **28** | **29** |
| Monomer Composition | DCP (%) | 80 | 60 |
| | TCP (%) | 10 | 10 |
| | IPN (%) | 10 | 30 |
| Molding Operation | | Easy | Easy |
| Properties of Reinforced Polymer: | Filling Condition | Complete | Complete |
| | Flow Mark | None | None |
| | Weld Lines | None | None |

EXAMPLE 30

Into a mold with dimensions of 500 mm x 500 mm x 3 mm was placed a continuous strand glass fiber mat having a thickness of 3 mm (made by Sangoban; product name - U812$^R$,450 g/m$^2$). The mold was preheated to 60 °C.

Solutions A and B set forth in Example 19 were mixed in a ratio of 1:1, using a gear pump and power mixer. The mixed reaction solution was fed into the aforementioned mold with a pressure of less than 1.0 kg/cm$^2$ (the exhaust pressure of the gear pump). The feed time was approximately 25 seconds.

After completing the feed, the reaction proceeded for 90 seconds. The molded product was then removed from the mold. A flat reinforced plaque having a good outward appearance without flow marks or weld lines was obtained. The Tg of this plaque was 143 °C, the bending strength was 15.8 kg/mm$^2$, the bending elasticity was 511 kg/mm$^2$, the notched Izod impact strength was an excellent value of more than 80 kg/cm. Specific gravity was 1.34, and the glass fiber content was 35 percent.

When this plaque plate was cut in cross-section, it was confirmed that the resin completely filled the spaces between glass fibers.

Comparative EXAMPLE 31

This example was conducted in the same manner as Example 30, except that the monomer mixture of Solution B used only 90 parts of DCP, 10 parts of TCP. VNB was not employed.

The reaction activity was as follows: PL was 2 minutes and 50 seconds and SMT was 13 minutes 38 seconds at 30 °C.

Feeding of the reaction solution into the mold was conducted at a feed pressure reaching 3.0 kg/cm$^2$ (measured at the middle of the feed cycle). The feed time was approximately 25 seconds. After polymerization the molded plaque was removed from the mold.

The marks left by the shifting of the glass mat within the mold were observable in the plaque. There were many unfilled voids in the polymer matrix. Flow marks and weld lines were observed on the surface and within the molded product. Physical properties were not measured.

EXAMPLE 32

This example was conducted in the same manner as set forth in Example 30, except that the continuous strand glass fiber mat was replaced with 16 plies of styryl-silane treated fabric cloth (Asahi Fiber Glass K.K.; product name MS 250-1$^R$,211 g/m$^2$). The feed pressure was less than 3 kg/m$^2$.

The obtained molded product had a good outward appearance, without flow marks and weld lines. The bending elasticity was 1700 kg/mm$^2$ and the specific gravity was 1.67.

In addition, another experiment was conducted in the same manner as this example, but without using VNB. During injection of the monomer solution, the pouring pressure increased abnormally, and it was not possible to feed the reaction solution into the mold.

EXAMPLE 33

This example was conducted in the same manner as Example 32, except that the continuous strand glass fiber mat was replaced with 12 plies of carbon cloth (Toray, K.K; product name Toreka #6343$^R$, 200 g/$^2$). The carbon cloth was washed in toluene and dried before it was placed in the mold. The mold feed pressure was less than 3 kg/m$^2$.

The obtained molded product had a good outward appearance, without flow marks and weld lines. The bending elasticity was 4500 kg/mm$^2$, specific gravity was 1.34, and carbon cloth content ratio was 59 percent.

**Claims**

**1.** A method for extending the pot life of a bulk polymerizable reaction solution comprising adding an effective amount of a VNB pot life extending agent of the formula:

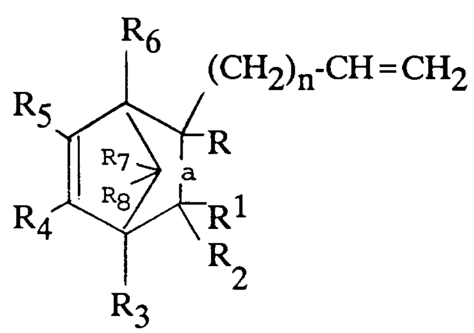

wherein R, $R_1$, and $R_2$ independently represent hydrogen, $C_1$ to $C_6$ alkyl and monomethyl, monochloro and dichloro substituents thereof, $C_2$ to $C_6$ alkenyl and monomethyl, monochloro and dichloro substituents thereof; $R_3$, $R_4$, $R_5$, $R_6$, $R_7$ and $R_8$ independently represent hydrogen, a methyl group or a halogen atom; n is 0 to 4; and "a" represents a single or double bond with the proviso that when "a" is a double bond, R and $R_1$ are not present; to a reactive solution comprising at least one norbornene monomer having 3 or more rings in its backbone, tricyclopentadiene, a molybdenum metathesis catalyst and a cocatalyst.

**2.** The method of claim 1 wherein the tricyclopentadiene is selected from the group consisting of symmetrical trimers, unsymmetrical trimers and mixtures thereof.

**3.** The method of claim 1 wherein the norbornene monomer is selected from the group consisting of dicyclopentadiene, dihydrodicyclopentadiene; tetracyclododecene, methyltetracyclododecene, ethyltetracyclododecene, dimethyltetracyclododecene, ethylidenetetracyclododecene, phenyltetracyclododecene; tricyclopentadiene; tetracyclopentadiene; and mixtures thereof.

**4.** The method of claim 1 wherein the reaction solution further comprises monomers selected from the group consisting of 2-norbornene, 5-methyl-2-norbornene, t-ethyl-2-norbornene, 5-butyl-2-norbornene, 5-hexyl-2-norbornene, 5-ethylidene-2-norbornene, 5-phenyl-2-norbornene, cyclobutene, cyclopentene, cyclopentadiene, cyclooctane, cyclododecene, and mixtures thereof.

**5.** The method of claim 1 wherein the VNB pot life adjusting agent is selected from the group consisting of 5-vinylbicyclo [2,2,1] hepto-2-ene, 5-isopropenylbicyclo [2,2,1] hepto-2-ene, 5-vinyl-4-vinylbicyclo [2,2,1] hepto-2-ene, 5-propenylbicyclo [2,2,1] hepto-2-ene, 5-butenyl-bicyclo [2,2,1] hepto-2-ene, 5-pentenyl-bicyclo [2,2,1] hepto-2-ene; monomethyl substitutes of the above; monochloro substitutes of

the above; dichloro substitutes of the above; 5-alpha-chlorovinylbicyclo [2,2,1] hepto-2-ene; 5-vinylbicyclo [2,2,1] hepto-1,4-diene; and mixtures thereof.

**6.** The method of claim 1 wherein the VNB pot life adjusting agent is added in the amount of at least 0.5 weight parts per 100 weight parts of monomer.

**7.** The method of claim 6 wherein the VNB pot life adjusting agent is added in an amount of 1 to 60 weight parts per 100 weight parts of monomer.

**8.** A method for making a ring-opened polynorbornene molded article comprising: feeding a bulk polymerizable reactive solution into a mold, said solution comprising at least one norbornene monomer having 3 or more rings in its backbone, tricyclopentadiene, a VNB pot life extending agent as defined in claim 1, a molybdenum metathesis catalyst and a cocatalyst; polymerizing said reactive solution in said mold producing a solid article; and removing said article from said mold.

**9.** The method of claim 8 wherein reinforcing material is placed in the mold before introducing the reaction solution.

**10.** The method of claim 8 wherein the tricyclopentadiene is selected from the group consisting of symmetrical trimers, unsymmetrical trimers and mixtures thereof.

**11.** The method of claim 8 wherein the norbornene monomer is selected from the group consisting of dicyclopentadiene, dihydrodicyclopentadiene; tetracyclododecene, methyltetracyclododecene, ethyltetracyclododecene, dimethyltetracyclododecene, ethylidenetetracyclododecene, phenyltetracyclododecene; tricyclopentadiene; tetracyclopentadiene; and mixtures thereof.

**12.** The method of claim 8 wherein the reaction solution further comprises monomers selected from the group consisting of 2-norbornene, 5-methyl-2-norbornene, t-ethyl-2-norbornene, 5-butyl-2-norbornene, 5-hexyl-2-norbornene, 5-ethylidene-2-norbornene, 5-phenyl-2-norbornene, cyclobutene, cyclopentene, cyclopentadiene, cyclooctane, cyclododecene, and mixtures thereof.

**13.** The method of claim 8 wherein the VNB pot life adjusting agent is selected from the group consisting of 5-vinylbicyclo [2,2,1] hepto-2-ene, 5-isopropenylbicyclo [2,2,1] hepto-2-ene, 5-vinyl-4-vinylbicyclo [2,2,1] hepto-2-ene, 5-propenylbicyclo [2,2,1] hepto-2-ene, 5-butenyl-bicyclo [2,2,1] hepto-2-ene, 5-pentenyl-bicyclo [2,2,1] hepto-2-ene; monomethyl substitutes of the above; monochloro substitutes of the above; dichloro substitutes of the above; 5-alpha-chlorovinylbicyclo [2,2,1] hepto-2-ene; 5-vinylbicyclo [2,2,1] hepto-1,4-diene; and mixtures thereof.

**14.** The method of claim 8 wherein the VNB pot life adjusting agent is added in the amount of at least 0.5 weight parts per 100 weight parts of monomer.

**15.** The method of claim 14 wherein the VNB pot life adjusting agent is added in an amount of 1 to 60 weight parts per 100 weight parts of monomer.

**16.** The method of claim 8 wherein the pot life adjusting agent is represented by the formula:

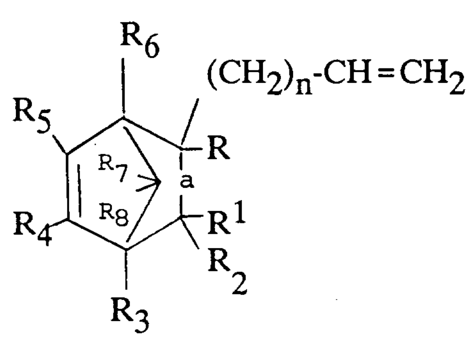

wherein R, $R_1$, and $R_2$ independently represent hydrogen, $C_1$ to $C_6$ alkyl and monomethyl, monochloro and dichloro substituents thereof, $C_2$ to $C_6$ alkenyl and monomethyl, monochloro and dichloro substituents thereof; $R_3$, $R_4$, $R_5$, $R_6$, $R_7$ and $R_8$ independently represent hydrogen, a methyl group or a halogen atom; n is 0 to 4; and "a" represents a single or double bond with the proviso that when "a" is a double bond, R and $R_1$ are not present.

## Patentansprüche

1. Verfahren zur Verlängerung der Topfzeit einer in Masse polymerisierbaren Reaktionslösung, umfassend das Hinzufügen einer wirksamen Menge eines VNB-Topfzeitverlängerers der Formel:

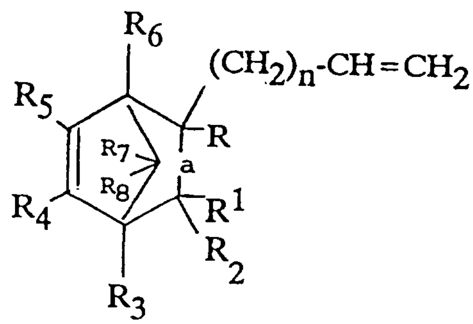

wobei R, $R_1$ und $R_2$ unabhängig Wasserstoff, $C_1$-$C_6$-Alkyl und monomethyl-, monochlor- und dichlorsubstituierte Derivate davon, $C_2$-$C_6$-Alkenyl und monomethyl-, monochlor- und dichlorsubstituierte Derivate davon darstellen, $R_3$, $R_4$, $R_5$, $R_6$, $R_7$ und $R_8$ unabhängig Wasserstoff, eine Methylgruppe oder ein Halogenatom darstellen, n 0 bis 4 ist und "a" eine Einfach- oder Doppelbindung darstellt, mit der Maßgabe, daß R und $R_1$ nicht vorhanden sind, wenn "a" eine Doppelbindung ist, zu einer reaktiven Lösung, die wenigstens ein Norbornenmonomer mit 3 oder mehr Ringen in seinem Gerüst, Tricyclopentadien, einem molybdänhaltigen Metathesekatalysator und einen Cokatalysator umfaßt.

2. Verfahren gemäß Anspruch 1, wobei das Tricyclopentadien aus der Gruppe ausgewählt ist, die aus symmetrischen Trimeren, unsymmetrischen Trimeren und Gemischen davon besteht.

3. Verfahren gemäß Anspruch 1, wobei das Norbornenmonomer aus der Gruppe ausgewählt ist, die aus Dicyclopentadien, Dihydrodicyclopentadien, Tetracyclododecen, Methyltetracyclododecen, Ethyltetracyclododecen, Dimethyltetracyclododecen, Ethylidentetracyclododecen, Phenyltetracyclododecen, Tricyclopentadien, Tetracyclopentadien und Gemischen davon besteht.

4. Verfahren gemäß Anspruch 1, wobei die Reaktionslösung weiterhin Monomere umfaßt, die aus der Gruppe ausgewählt sind, die aus 2-Norbornen, 5-Methyl-2-norbornen, t-Ethyl-2-norbornen, 5-Butyl-2-norbornen, 5-Hexyl-2-norbornen, 5-Ethyliden-2-norbornen, 5-Phenyl-2-norbornen, Cyclobuten, Cyclopenten, Cyclopentadien, Cyclooctan, Cyclododecen und Gemischen davon besteht.

5. Verfahren gemäß Anspruch 1, wobei der VNB-Topfzeitverlängerer aus der Gruppe ausgewählt ist, die aus 5-Vinylbicyclo[2,2,1]hepta-2-en, 5-Isopropenylbicyclo[2,2,1]hepta-2-en, 5-Vinyl-4-vinylbicyclo[2,2,1]-hepta-2-en,5-Propenylbicyclo[2,2,1]hepta-2-en, 5-Butenylbicyclo[2,2,1]hepta-2-en, 5-Pentenylbicyclo-[2,2,1]hepta-2-en, monomethylsubstituierten Derivaten der obigen, monochlorsubstituierten Derivaten der obigen, dichlorsubstituierten Derivaten der obigen, 5-$\alpha$-Chlorvinylbicyclo[2,2,1]hepta-2-en, 5-Vinylbicyclo[2,2,1]hepta-1,4-dien und Gemischen davon besteht.

6. Verfahren gemäß Anspruch 1, wobei der VNB-Topfzeitverlängerer in einer Menge von wenigstens 0,5 Gewichtsteilen pro 100 Gewichtsteilen Monomer zugegeben wird.

7. Verfahren gemäß Anspruch 6, wobei der VNB-Topfzeitverlängerer in einer Menge von 1 bis 60 Gewichtsteilen pro 100 Gewichtsteilen Monomer zugegeben wird.

**8.** Verfahren zur Herstellung eines geformten Gegenstands aus ringgeöffnetem Polynorbornen, umfassend: Einfüllen einer in Masse polymerisierbaren reaktiven Lösung in eine Form, wobei die Lösung wenigstens ein Norbornenmonomer mit 3 oder mehr Ringen in seinem Gerüst, Tricyclopentadien, einen wie in Anspruch 1 definierten VNB-Topfzeitverlängerer, einen molybdänhaltigen Metathesekatalysator und einen Cokatalysator umfaßt; Polymerisieren der reaktiven Lösung in der Form unter Bildung eines festen Gegenstands; und Entnehmen des Gegenstands aus der Form.

**9.** Verfahren gemäß Anspruch 8, wobei Verstärkungsmaterial in die Form gegeben wird, bevor die Reaktionslösung eingeführt wird.

**10.** Verfahren gemäß Anspruch 8, wobei das Tricyclopentadien aus der Gruppe ausgewählt ist, die aus symmetrischen Trimeren, unsymmetrischen Trimeren und Gemischen davon besteht.

**11.** Verfahren gemäß Anspruch 8, wobei das Norbornenmonomer aus der Gruppe ausgewählt ist, die aus Dicyclopentadien, Dihydrodicyclopentadien, Tetracyclododecen, Methyltetracyclododecen, Ethyltetracyclododecen, Dimethyltetracyclododecen, Ethylidentetracyclododecen, Phenyltetracyclododecen, Tricyclopentadien, Tetracyclopentydien und Gemischen davon besteht.

**12.** Verfahren gemäß Anspruch 8, wobei die Reaktionslösung weiterhin Monomere umfaßt, die aus der Gruppe ausgewählt sind, die aus 2-Norbornen, 5-Methyl-2-norbornen, t-Ethyl-2-norbornen, 5-Butyl-2-norbornen, 5-Hexyl-2-norbornen, 5-Ethyliden-2-norbornen, 5-Phenyl-2-norbornen, Cyclobuten, Cyclopenten, Cyclopentadien, Cyclooctan, Cyclododecen und Gemischen davon besteht.

**13.** Verfahren gemäß Anspruch 8, wobei der VNB-Topfzeitverlängerer aus der Gruppe ausgewählt ist, die aus 5-Vinylbicyclo[2,2,1]hepta-2-en, 5-Isopropenylbicyclo[2,2,1]hepta-2-en, 5-Vinyl-4-vinylbicyclo[2,2,1]-hepta-2-en,5-Propenylbicyclo[2,2,1]hepta-2-en, 5-Butenylbicyclo[2,2,1]hepta-2-en, 5-Pentenylbicyclo-[2,2,1]hepta-2-en, monomethylsubstituierten Derivaten der obigen, monochlorsubstituierten Derivaten der obigen, dichlorsubstituierten Derivaten der obigen, 5-α-Chlorvinylbicyclo[2,2,1]hepta-2-en, 5-Vinylbicyclo[2,2,1]hepta-1,4-dien und Gemischen davon besteht.

**14.** Verfahren gemäß Anspruch 8, wobei der VNB-Topfzeitverlängerer in einer Menge von wenigstens 0,5 Gewichtsteilen pro 100 Gewichtsteilen Monomer zugegeben wird.

**15.** Verfahren gemäß Anspruch 14, wobei der VNB-Topfzeitverlängerer in einer Menge von 1 bis 60 Gewichtsteilen pro 100 Gewichtsteilen Monomer zugegeben wird.

**16.** Verfahren gemäß Anspruch 8, wobei der Topfzeitverlängerer durch die Formel:

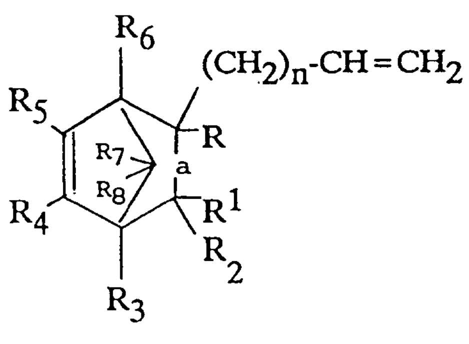

dargestellt wird, wobei R, $R_1$ und $R_2$ unabhängig Wasserstoff, $C_1$-$C_6$-Alkyl und monomethyl-, monochlor- und dichlorsubstituierte Derivate davon, $C_2$-$C_6$-Alkenyl und monomethyl-, monochlor- und dichlorsubstituierte Derivate davon darstellen, $R_3$, $R_4$, $R_5$, $R_6$, $R_7$ und $R_8$ unabhängig Wasserstoff, eine Methylgruppe oder ein Halogenatom darstellen, n 0 bis 4 ist und "a" eine Einfach- oder Doppelbindung darstellt, mit der Maßgabe, daß R und $R_1$ nicht vorhanden sind, wenn "a" eine Doppelbindung ist.

## Revendications

1. Procédé pour prolonger la durée de vie en pot d'une solution réactionnelle polymérisable en masse consistant à ajouter une quantité efficace d'un agent étendant la durée de vie en pot VNB de formule:

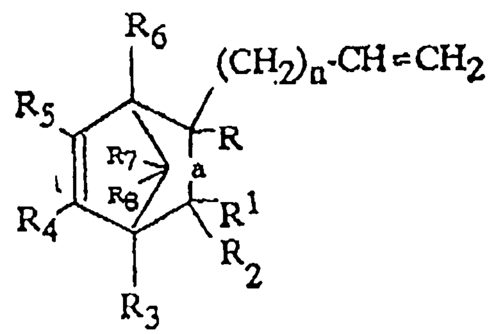

dans laquelle R, $R_1$ et $R_2$ représentent indépendamment un atome d'hydrogène, un groupement alkyle en $C_1$ à $C_6$ et les groupes monochloro-, dichloro- et monométhylsubstitués de celui-ci, un groupement alcényle en $C_2$ à $C_6$ et les groupes monochloro-, dichloro- et monométhylsubstitués de celui-ci; $R_3$, $R_4$, $R_5$, $R_6$, $R_7$ et $R_8$ représentent indépendamment un atome d'hydrogène, un groupe méthyle ou un atome d'halogène; n vaut de 0 à 4; et "a" représente une liaison simple ou double à condition que lorsque "a" est une double liaison, R et $R_1$ ne soient pas présent; à une solution réactive comprenant au moins un monomère norbornène ayant 3 cycles ou plus dans son squelette, un tricyclopentadiène, un catalyseur de métathèse à base de molybdène et un co-catalyseur.

2. Procédé selon la revendication 1, dans lequel le tricyclopentadiène est choisi dans le groupe formé par les trimères symétriques, les trimères non symétriques et leurs mélanges.

3. Procédé selon la revendication 1, dans lequel le monomère norbornène est choisi dans le groupe formé par le dicyclopentadiène, le dihydrodicyclopentadiène, le tétracyclododécène, le méthyltétracyclododécène, l'éthyltétracyclododécène, le diméthyltétracyclododécène, l'éthylidènetétracyclododécène, le phényltétracyclododécène, le tricyclopentadiène, le tétracyclopentadiène et leurs mélanges.

4. Procédé selon la revendication 1, dans lequel la solution réactionnelle comprend de plus des monomères choisis dans le groupe formé par le 2-norbornène, le 5-méthyl-2-norbornène, le t-éthyl-2-norbornène, le 5-butyl-2-norbornène, le 5-hexyl-2-norbornène, le 5-éthylidène-2-norbornène, le 5-phényl-2-norbornène, le cyclobutène, le cyclopentène, le cyclopentadiène, le cyclooctane, le cyclododécène et leurs mélanges.

5. Procédé selon la revendication 1, dans lequel l'agent ajustant la durée de vie en pot VNB est choisi dans le groupe formé par le 5-vinylbicyclo-[2,2,1]-hepto-2-ène, le 5-isopropénylbicyclo-[2,2,1]-hepto-2-ène, le 5-vinyl-4-vinylbicyclo-[2,2,1]-hepto-2-ène, le 5-propénylbicyclo-[2,2,1]-hepto-2-ène, le 5-buténylbicyclo-[2,2,1]-hepto-2-ène, le 5-penténylbicyclo-[2,2,1]-hepto-2-ène; les dérivés monométhyl-substitués des composés ci-dessus; les dérivés monochloro-substitués des composés ci-dessus; les dérivés dichloro-sübstitués des composés ci-dessus; le 5-alpha-chlorovinylbicyclo-[2,2,1]-hepto-2-ène; le 5-vinylbicyclo-[2,2,1]-hepto-1,4-diène et leurs mélanges.

6. Procédé selon la revendication 1, dans lequel l'agent ajustant la durée de vie en pot VNB est ajouté en une quantité d'au moins 0,5 partie en poids pour 100 parties en poids de monomère.

7. Procédé selon la revendication 6, dans lequel l'agent ajustant la durée de vie en pot VNB est ajouté en une quantité de 1 à 60 parties en poids pour 100 parties en poids de monomère.

8. Procédé pour fabriquer un article moulé de polynorbornène à cycle ouvert consistant: à introduire une solution réactive polymérisable en masse dans un moule, ladite solution comprenant au moins un monomère norbornène ayant 3 cycles ou plus dans son squelette, un tricyclopentadiène, un agent

prolongeant la durée de vie en pot VNB tel que défini dans la revendication 1, un catalyseur de métathèse à base de molybdène et un co-catalyseur; à polymériser ladite solution réactive dans ledit moule produisant un article solide; et à retirer ledit article dudit moule.

**9.** Procédé selon la revendication 8, dans lequel on place une matière de renforcement dans le moule avant d'introduire la solution réactionnelle.

**10.** Procédé selon la revendication 8, dans lequel le tricyclopentadiène est choisi dans le groupe formé par les trimères symétriques, les trimères non symétriques et leurs mélanges.

**11.** Procédé selon la revendication 8, dans lequel le monomère norbornène est choisi dans le groupe formé par le dicyclopentadiène, le dihydrodicyclopentadiène; le tétracyclododécène, le méthyltétracyclododécène, l'éthyltétracyclododécène, le diméthyltétracyclododécène, l'éthylidènetétracyclododécène, le phényltétracyclododécène, le tricyclopentadiène, le tétracyclopentadiène et leurs mélanges.

**12.** Procédé selon la revendication 8, dans lequel la solution réactionnelle comprend de plus des monomères choisis dans le groupe formé par le 2-norbornène, le 5-méthyl-2-norbornène, le t-éthyl-2-norbornène, le 5-butyl-2-norbornène, le 5-hexyl-2-norbornène, le 5-éthylidène-2-norbornène, le 5-phényl-2-norbornène, le cyclobutène, le cyclopentène, le cyclopentadiène, le cyclooctane, le cyclododécène et leurs mélanges.

**13.** Procédé selon la revendication 8, dans lequel l'agent d'ajustement de la durée de vie en pot VNB est choisi dans le groupe formé par le 5-vinylbicyclo-[2,2,1]-hepto-2-ène, le 5-isopropénylbicyclo-[2,2,1]-hepto-2-ène, le 5-vinyl-4-vinylbicyclo-[2,2,1]-hepto-2-ène, le 5-propénylbicylo-[2,2,1]-hepto-2-ène, le 5-buténylbicyclo-[2,2,1]-hepto-2-ène, le 5-penténylbicyclo-[2,2,1]-hepto-2-ène, les dérivés monométhylsübstitués des composés ci-dessus, les dérivés monochlorosubstitués des composés ci-dessus; les dérivés dichlorosubstitués des composés ci-dessus; le 5-alpha-chlorovinylbicyclo-[2,2,1]-hepto-2-ène; le 5-vinylbicyclo-[2,2,1]-hepto-1,4-diène et leurs mélanges.

**14.** Procédé selon la revendication 8, dans lequel l'agent d'ajustement de la durée de vie en pot VNB est ajouté en une quantité d'au moins 0,5 partie en poids pour 100 parties en poids de monomère.

**15.** Procédé selon la revendication 14, dans lequel l'agent d'ajustement de la durée de vie en pot VNB est ajouté en une quantité de 1 à 60 parties en poids pour 100 parties en poids de monomère.

**16.** Procédé selon la revendication 8, dans lequel l'agent d'ajustement de la durée de vie en pot est représenté par la formule:

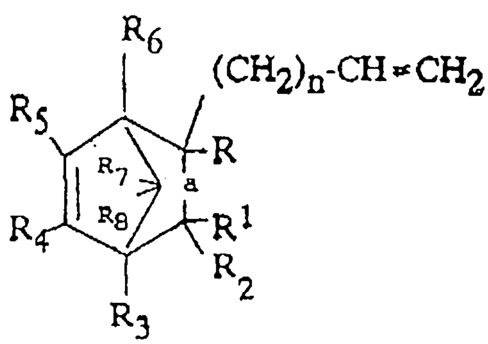

dans laquelle R, $R_1$ et $R_2$ représentent indépendamment un atome d'hydrogène, un groupement alkyle en $C_1$ à $C_6$ et les groupes monochloro-, dichloro- et monométhylsubstitués de celui-ci, un groupement alcényle en $C_2$ à $C_6$ et les groupes monochloro-, dichloro- et monométhylsubstitués de celui-ci; $R_3$, $R_4$, $R_5$, $R_6$, $R_7$ et $R_8$ représentent indépendamment un atome d'hydrogène, un groupe méthyle ou un atome d'halogène; n vaut de 0 à 4 et "a" représente une liaison double ou simple à condition que lorsque "a" est une double liaison, R et $R_1$ ne soient pas présents.